# EUROPÄISCHE PATENTSCHRIFT

(11) **EP 3 598 606 B1**
(45) Veröffentlichungstag und Bekanntmachung des Hinweises auf die Patenterteilung: **20.10.2021**
(21) Anmeldenummer: 19176262.4
(22) Anmeldetag: 23.05.2019
(51) Int. Cl.: H02J 9/00, G01D 4/00, G01R 31/382

(54) **ERFASSUNG DER BETRIEBSSTUNDEN EINES ELEKTRISCHEN GERÄTES**
DETECTION OF THE OPERATING HOURS OF AN ELECTRICAL DEVICE
ENREGISTREMENT DES HEURES DE FONCTIONNEMENT D'UN APPAREIL ÉLECTRIQUE

(30) Priorität: 17.07.2018 DE 102018211864
(43) Veröffentlichungstag der Anmeldung: 22.01.2020
(73) Patentinhaber: Siemens Schweiz AG, 8047 Zürich (CH)
(72) Erfinder: Hoch, Peter, 93080 Pentling (DE)
(74) Vertreter: Maier, Daniel Oliver

(56) Entgegenhaltungen:
- DE-A1-102014 208 316
- DE-C1- 3 814 551
- DE-C1- 3 940 928

## Beschreibung

Die Erfindung betrifft ein Messgerät zur Erfassung der Betriebsstunden eines elektrischen Gerätes. Weiterhin betrifft die Erfindung betrifft einen Aktor, insbesondere Schaltaktor oder Dimmaktor, umfassend ein Messgerät zur Erfassung der Betriebsstunden eines elektrischen Gerätes.

Zur Ermittlung der Betriebsstunden eines Gerätes ist es bekannt Aktoren einzusetzen, die die jeweiligen Betriebsstunden aufzeichnen bzw. zählen, in denen der Aktor das Gerät mit Netzspannung versorgt. Dies kann z.B. durch einen Binäraktor erfolgen, der sich ausschließlich in zwei Lagen positionieren lässt, welche über ein einziges Bit vollständig beschreibbar sind.

Weiterhin sind Aktoren bekannt, die nur Betriebsstunden zählen wenn der Aktor die Last (d.h. das elektrische Gerät) mit Spannung versorgt und die angeschlossene Last Strom verbraucht. Dadurch kann ein Gerät (z.B. eine Leuchte) durch eine Gebäudeautomatisierung eingeschaltet werden und das konkrete (physikalische) Einschalten kann durch einen integrierten Bewegungsmelder erfolgen. In diesem Fall werden dann nur die wirklichen Betriebsstunden der Leuchte gezählt.

Es gibt nun aber elektrische Geräte, die bedingt durch einen Standby-Energieverbrauch in diesem Standy-Modus (z.B. Ruhezustand) immer Betriebsstunden zählen obwohl das Gerät nicht arbeitet bzw. nicht in Betrieb ist, z.B. Fernseher im Standby-Modus.

Auch ein Beamer verbraucht im Ruhezustand Strom, und auch diese Zeiten im Ruhezustand würden als Betriebsstunden gezählt werden.

Für eine vorbeugende Wartung ist es aber wichtig zu wissen, wieviele Stunden das Gerät wirklich eingeschaltet war. Nur so können bei einem Beamer bedarfsgerecht die Filter gereinigt oder die Lampe getauscht werden.

In der europäischen Patentschrift EP0981758B1 wird ein Messsystem zur Bestimmung der Betriebszeit einer Messvorrichtung offenbart, wobei durch ein externes Datenverarbeitungsmittel die verbrauchte Batteriekapazität entsprechend der Betriebszeit und im Voraus gespeicherten und den Energieverbrauch der Messvorrichtung im Bereitschaftsbetriebsmodus angebenden Daten geschätzt wird. Die DE3940928C1 offenbart einen Betriebsstundenzähler für ein elektrisches Gerät.

Die bekannten Verfahren zur Erfassung von realen Betriebsstunden elektrischer Geräte sind aber aufwändig und können ungenaue Ergebnisse liefern.

Es ist daher die Aufgabe der vorliegenden Erfindung, ein Messgerät zur sicheren und genauen Erfassung der realen Betriebsstunden eines elektrischen Gerätes bereitzustellen.

Die Aufgabe wird gelöst durch ein Messgerät zur Erfassung der Betriebszeiten eines elektrischen Verbrauchers, insbesondere eines elektrischen Gerätes, umfassend:
einen ersten Zähler zum Erfassen der am elektrischen Gerät anliegenden aktiven Betriebszeit, wobei der erste Zähler eingerichtet ist, die Zeit zu erfassen, wenn die vom elektrischen Verbraucher verbrauchte elektrische Leistung eine definierte Leistungsschwelle überschreitet (dies erfolgt insbesondere über eine Strommessung);
einen zweiten Zähler zum Erfassen der Standby-Zeit des elektrischen Verbrauchers, wobei der zweite Zähler eingerichtet ist, zu erkennen, wenn am elektrischen Verbraucher eine elektrische Spannung anliegt, wobei der zweite Zähler weiter dazu eingerichtet ist, die Zeit zu erfassen, bis die vom Verbraucher verbrauchte elektrische Leistung die definierte Leistungsschwelle erreicht hat oder wieder unterschritten hat, wobei die Leistungsschwelle auf historischen bzw. aufgezeichneten Daten für das elektrische Gerät beruht und angepasst wird, wenn die Tendenz der Standby-Leistung ansteigt.

Bei der Leistungsschwelle kann es sich um eine Wirkleistungsschwelle oder um eine Scheinleistungsschwelle handeln. Mit Vorteil ist das Messgerät dazu eingerichtet, dass bei Über- und/oder Unterschreiten der definierten Leistungsschwelle, insbesondere Wirkleistungsschwelle, Meldungen und/oder Events (z.B. Meldung an andere Geräte) und/oder Signale (z.B. Audio- und/oder Leuchtsignale) und/oder Anzeigen (z.B. auf einem Display des Messgerätes) vom Messgerät abgesetzt werden. Mit Vorteil ist das Messgerät dazu eingerichtet, dass die Leistungsschwelle, insbesondere Wirkleistungsschwelle, für das elektrische Gerät von einem Bediener eingestellt und verändert werden kann. Mit Vorteil wird die Leistungsschwelle am Messgerät automatisch eingelernt, z.B. durch eine Programmiertaste am Messgerät. Dabei beruht die Leistungsschwelle auf historischen bzw. aufgezeichneten Daten für das elektrische Gerät (z.B. Alter, Typ, Nutzung) und wird mit Vorteil angepasst, wenn die Tendenz der Standby-Leistung ansteigt (z.B. durch Alterung von Bauteilen). Die Leistungsschwelle, insbesondere die Wirkleistungsschwelle, kann z.B. als einfacher Schwellenwertschalter (mit Ein-/Ausschaltschwelle) oder als Schmitt-Trigger (wobei insbesondere Ein- und Ausschaltschwellen nicht zusammenfallen) realisiert werden. Mit Vorteil wird für die Implementierung der Leistungsschwelle eine Hysterese verwendet, um insbesondere Jitter vorzubeugen. Mit Vorteil ist das Messgerät dazu eingerichtet, dass das elektrische Gerät nicht über eine Bedieneinrichtung (z.B. Schalter) ausschaltbar (d.h. vom Netz trennbar) ist, solange die am elektrischen Gerät anliegende elektrische Leistung die definierte Leistungsschwelle, insbesondere Wirkleistungsschwelle, überschreitet. Der erste und der zweite Zähler sind insbesondere Zeitzähler, insbesondere zur Aufzeichnung von Stunden, Minuten, Sekunden. Beim ersten Zähler könnte weiterhin die Leistung gezählt werden (z.B. kWh-Zähler) .

Eine erste vorteilhafte Ausgestaltung der Erfindung liegt darin, dass das Messgerät einen dritten Zähler umfasst, wobei der dritte Zähler eingerichtet ist, zu erkennen, wenn am elektrischen Verbraucher eine elektrische Spannung anliegt, wobei der dritte Zähler weiter eingerichtet ist, die Zeit zu erfassen, wenn am elektrischen Verbraucher eine elektrische Spannung anliegt. Dadurch können insbesondere Wartungsmassnahmen vorausschauend und angemessen durchgeführt werden.

Eine weitere vorteilhafte Ausgestaltung der Erfindung liegt darin, dass der erste Zähler eingerichtet ist, zu erkennen, wenn eine Einschaltvorrichtung oder ein Relais den Verbraucher mit Energie versorgt. Auch dadurch können insbesondere Wartungsmassnahmen vorausschauend und angemessen durchgeführt werden.

Eine weitere vorteilhafte Ausgestaltung der Erfindung liegt darin, dass der erste, zweite und dritte elektrische Zähler als nichtflüchtige Speicher (Non-Volatile Memory, NVM) oder persistente Speicher realisiert sind, z.B. als EPROM oder Flash-Speicher. Dadurch können insbesondere Daten (z.B. Stand- oder Betriebszeiten) für eine spätere Auswertung aufgezeichnet werden. Die aufgezeichneten Daten können z.B. für die Festsetzung bzw. Anpassung der Wirkleistungsschwelle verwendet werden.

Eine weitere vorteilhafte Ausgestaltung der Erfindung liegt darin, dass jeweils entsprechende Werte, die die jeweils erfasste Leistung (Wirkleistung oder Scheinleistung) und die jeweils erfasste Standby-Zeit repräsentieren, in einen nichtflüchtigen Speicher geschrieben werden. Die im nichtflüchtigen Speicher aufgezeichneten Daten können z.B. für die Festsetzung bzw. Anpassung der Leistungsschwelle (z.B. Wirkleistungsschwelle) verwendet werden.

Eine weitere vorteilhafte Ausgestaltung der Erfindung liegt darin, dass die definierte Leistungsschwelle (z.B. Wirkleistungsschwelle) bei im Wesentlichen konstanter Netzspannung am elektrischen Gerät mit einer definierten Stromschwelle (z.B. Wirkstromschwelle) korrespondiert. Dadurch kann z.B. die Wirkleistungsschwelle in Abhängigkeit von der jeweiligen Netzspannung oder der definierten Wirkstromschwelle festgelegt werden.

Eine weitere vorteilhafte Ausgestaltung der Erfindung liegt darin, dass, wenn die anliegende elektrische Leistung einen Blindleistungsanteil von kleiner 10%, insbesondere kleiner 5%, aufweist, anstelle der Wirkleistung die Scheinleistung erfasst wird, wobei die definierte Wirkleistungsschwelle dann mit einer definierten Scheinleistungsschwelle korrespondiert. Die Scheinleistung setzt sich zusammen aus tatsächlich am elektrischen Gerät umgesetzter Wirkleistung einer zusätzlichen Blindleistung, die nicht am elektrischen Gerät umgesetzt wird. Die Scheinleistung an einem elektrischen Gerät kann im üblichen leichter bestimmt werden als die Wirkleistung.

Eine weitere vorteilhafte Ausgestaltung der Erfindung liegt darin, dass die definierte Scheinleistungsschwelle bei im Wesentlichen konstanter Netzspannung am elektrischen Gerät mit einer definierten Scheinstromschwelle korrespondiert. Dadurch kann z.B. die Scheinleistungsschwelle in Abhängigkeit von der jeweiligen Netzspannung oder der definierten Scheinstromschwelle bestimmt werden.

Eine weitere vorteilhafte Ausgestaltung der Erfindung liegt darin, dass das Messgerät im elektrischen Gerät integriert ist. Dadurch entfällt z.B. eine externe Verkabelung zwischen den beiden Geräten. Weiterhin besteht weniger Platzbedarf an einem Aufstellungsort der Geräte.

Eine weitere vorteilhafte Ausgestaltung der Erfindung liegt darin, dass das Messgerät als Stromzählersteckdose ausgebildet ist und das elektrische Gerät an der Stromzählersteckdose anschliessbar ist. Dadurch kann das elektrische Gerät leicht mit dem Messgerät nachgerüstet und mit diesem leicht angeschlossen werden.

Eine weitere vorteilhafte Ausgestaltung der Erfindung liegt darin, dass die Wirkleistung oder die Scheinleistung aus mehreren Phasen (z.B. Drehstrom, Dreiphasenwechselstrom) gebildet wird. Dies lässt sich z.B. vorteilhaft bei einem Motor (d.h. das elektrische Gerät ist ein Elektromotor) verwenden. Ein Motor verschleisst unter Leerlauf anders als unter Last, diese Unterscheidung kann z.B. vorteilhaft für die Bestimmung der Wartungsintervalle des Motors verwendet werden.

Eine weitere vorteilhafte Ausgestaltung der Erfindung liegt darin, dass das Messgerät eingerichtet ist, ein Ausschalten des elektrischen Gerätes (z.B. Beamer) im Nicht-Standby-Modus zu verhindern. Dadurch wird z.B. die Lebensdauer eines Beamers verlängert.

Eine weitere vorteilhafte Ausgestaltung der Erfindung liegt darin, dass das Messgerät eingerichtet ist für eine Integration in einem Aktor, insbesondere Schaltaktor oder Dimmaktor. Ein Dimmaktor kann über einen Phasenanschnitt oder einen Phasenabschnitt angesteuert werden. Ein Schaltaktor kann z.B. über eine Puls-Weiten-Modulation (PWM) angesteuert werden. Ein PWM-Signal kann z.B. über einen Tiefpass demoduliert werden

Die Aufgabe wird weiterhin gelöst durch einen Aktor, insbesondere Schaltaktor oder Dimmaktor, umfassend ein erfindungsgemässes Messgerät zur Erfassung der Betriebsstunden eines elektrischen Gerätes. Das erfindungsgemässes Messgerät wird mit Vorteil in den Aktor, z.B. Schaltaktor oder Dimmaktor integriert. Dies ergibt ein Gerät mit einer kompakten Bauweise.

Die Erfindung sowie vorteilhafte Ausführungen der vorliegenden Erfindung werden am Beispiel der nachfolgenden Figur erläutert. Dabei zeigt:

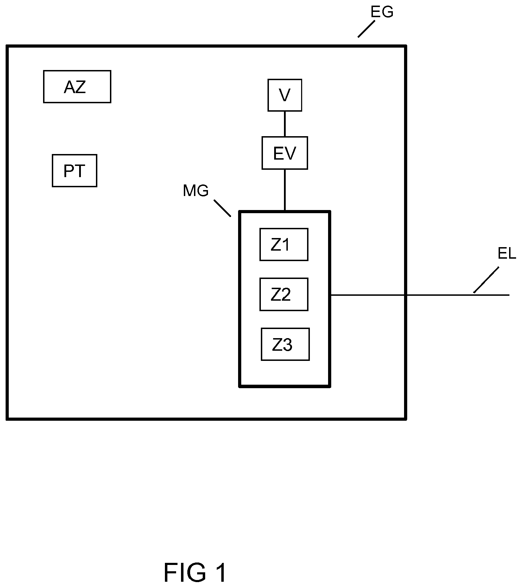

- FIG 1: ein beispielhaftes Messgerät zur Erfassung der Betriebsstunden eines elektrischen Gerätes.

Figur 1 zeigt ein beispielhaftes Messgerät MG zur Erfassung der Betriebszeiten eines elektrischen Verbrauchers V, insbesondere eines elektrischen Gerätes EG. Das beispielhafte Messgerät MG umfasst einen ersten Zähler Z1 zum Erfassen der am elektrischen Gerät anliegenden aktiven Betriebszeit, wobei der erste Zähler Z1 eingerichtet ist, die Zeit zu erfassen, wenn die vom elektrischen Verbraucher V verbrauchte elektrische Leistung eine definierte Leistungsschwelle überschreitet. Weiterhin umfasst das Messgerät MG einen zweiten Zähler Z2 zum Erfassen der Standby-Zeit des elektrischen Verbrauchers V, wobei der zweite Zähler Z2 eingerichtet ist, zu erkennen, wenn am elektrischen Verbraucher V eine elektrische Spannung anliegt, wobei der zweite Zähler Z2 weiter dazu eingerichtet ist, die Zeit zu erfassen, bis die vom Verbraucher verbrauchte elektrische Leistung die definierte Leistungsschwelle erreicht hat oder wieder unterschritten hat.

Die elektrische Leistungszuführung EL zum Messgerät MG und zum Verbraucher V (z.B. Lampe, Motor, etc.) bzw. zum elektrischen Gerät EG erfolgt über geeignete elektrische Anschlüsse (z.B. Netzstecker, Stecker, Leitungen). Das Messgerät MG ist eingerichtet, dass es zwischen der Versorgungsspannung (bzw. der Stromzuführung) und dem Verbraucher V anschliessbar ist.

Mit Vorteil umfasst das Messgerät MG einen dritten Zähler Z3, wobei der dritte Zähler Z3 eingerichtet ist, zu erkennen, wenn am elektrischen Verbraucher V (z.B. Lampe) eine elektrische Spannung anliegt, wobei der dritte Zähler Z) weiter eingerichtet ist, die Zeit zu erfassen, wenn am elektrischen Verbraucher V eine elektrische Spannung anliegt.

Mit Vorteil ist der erste Zähler Z1 eingerichtet, zu erkennen, wenn eine Einschaltvorrichtung EV oder ein Relais den Verbraucher mit Energie versorgt.

Mit Vorteil ist das Messgerät MG dazu eingerichtet, dass bei Über- und/oder Unterschreiten der definierten Leistungsschwelle, insbesondere Wirkleistungsschwelle, Meldungen und/oder Events (z.B. Meldung an andere Geräte) und/oder Signale (z.B. Audio- und/oder Leuchtsignale) und/oder Anzeigen (z.B. auf einem Display AZ des Messgerätes MG) vom Messgerät MG abgesetzt werden. Mit Vorteil ist das Messgerät MG dazu eingerichtet, dass die Wirkleistungsschwelle für das elektrische Gerät EG von einem Bediener eingestellt und verändert werden kann. Mit Vorteil wird die Leistungsschwelle (z.B. Wirkleistungsschwelle) am Messgerät MG automatisch eingelernt, z.B. durch eine Programmiertaste PT am Messgerät MG. Mit Vorteil beruht die Leistungsschwelle auf historischen bzw. aufgezeichneten Daten für das elektrische Gerät EG (z.B. Alter, Typ, Nutzung) und wird mit Vorteil angepasst, wenn die Tendenz der Standby-Leistung ansteigt (z.B. durch Alterung von Bauteilen). Die Leistungsschwelle kann z.B. als einfacher Schwellenwertschalter (mit Ein-/Ausschaltschwelle) oder als Schmitt-Trigger (wobei insbesondere Ein- und Ausschaltschwellen nicht zusammenfallen) realisiert werden. Mit Vorteil wird für die Implementierung der Wirkleistungsschwelle eine Hysterese verwendet, um insbesondere Jitter (z.B. schnelles hintereinander stattfindendes Umschalten zwischen Zähler Z1 und Zähler Z2) vorzubeugen. Mit Vorteil ist das Messgerät MG dazu eingerichtet, dass das elektrische Gerät EG oder der Verbraucher V nicht über eine Bedieneinrichtung (z.B. Schalter) ausschaltbar (d.h. vom Netz trennbar) ist, solange die am elektrischen Gerät EG anliegende elektrische Leistung (oder der anliegende Strom) die definierte Leistungsschwelle überschreitet.

Mit Vorteil sind der erste Z1, der zweite Z2 und der dritte Z3 Zähler als nichtflüchtige Speicher (Non-Volatile Memory, NVM) oder persistente Speicher realisiert sind, z.B. als EPROM oder Flash-Speicher. Dadurch können insbesondere Daten (z.B. Stand- oder Betriebszeiten) für eine spätere Auswertung aufgezeichnet werden. Die aufgezeichneten Daten können z.B. für die Festsetzung bzw. Anpassung der Leistungsschwelle verwendet werden.

Mit Vorteil werden die jeweils für die Leistung (z.B. Wirkleistung oder Scheinleistung) erfasste Zeit und die jeweils erfasste Standby-Zeit in einen nichtflüchtigen Speicher des Messgerätes MG und/oder des elektrischen Gerätes EG geschrieben. Die im nichtflüchtigen Speicher aufgezeichneten Daten können z.B. für die Festsetzung bzw. Anpassung der Leistungsschwelle verwendet werden.

Mit Vorteil korrespondiert die definierte Wirkleistungsschwelle bei im Wesentlichen konstanter Netzspannung am elektrischen Gerät EG mit einer definierten Wirkstromschwelle. Dadurch kann z.B. die Wirkleistungsschwelle in Abhängigkeit von der jeweiligen Netzspannung oder der definierten Wirkstromschwelle festgelegt werden.

Eine weitere vorteilhafte Ausgestaltung der Erfindung liegt darin, dass, wenn die anliegende elektrische Leistung EL einen Blindleistungsanteil von kleiner 10%, insbesondere kleiner 5%, aufweist, anstelle der Wirkleistung die Scheinleistung erfasst wird, wobei die definierte Wirkleistungsschwelle dann mit einer definierten Scheinleistungsschwelle korrespondiert. Die Scheinleistung setzt sich zusammen aus tatsächlich am elektrischen Gerät EG umgesetzter Wirkleistung einer zusätzlichen Blindleistung, die nicht am elektrischen Gerät EG umgesetzt wird. Die Scheinleistung an einem elektrischen Gerät EG kann im üblichen leichter bestimmt werden als die Wirkleistung.

Mit Vorteil korrespondiert die definierte Scheinleistungsschwelle bei im Wesentlichen konstanter Netzspannung am elektrischen Gerät EG mit einer definierten Scheinstromschwelle. Dadurch kann z.B. die Scheinleistungsschwelle in Abhängigkeit von der jeweiligen Netzspannung EL oder der definierten Scheinstromschwelle bestimmt werden.

Mit Vorteil ist das Messgerät MG im elektrischen Gerät EG integriert ist. Dadurch entfällt z.B. eine externe Verkabelung zwischen den beiden Geräten. Weiterhin besteht weniger Platzbedarf an einem Aufstellungsort der Geräte. Beim elektrischen Gerät EG kann es sich z.B. um einen Aktor handeln (insbesondere Schaltaktor oder Dimmaktor).

Mit Vorteil ist das Messgerät MG als Stromzählersteckdose ausgebildet ist und das elektrische Gerät EG an der Stromzählersteckdose anschliessbar. Dadurch kann das elektrische Gerät EG leicht mit dem Messgerät MG nachgerüstet und mit diesem leicht angeschlossen werden.

Eine weitere vorteilhafte Ausgestaltung der Erfindung liegt darin, dass die Leistung bzw. Wirkleistung aus mehreren Phasen (z.B. Drehstrom, Dreiphasenwechselstrom) gebildet wird. Dies lässt sich z.B. vorteilhaft bei einem Motor (d.h. das elektrische Gerät ist ein Elektromotor) verwenden. Ein Motor verschleisst unter Leerlauf anders als unter Last, diese Unterscheidung kann z.B. vorteilhaft für die Bestimmung der Wartungsintervalle des Motors verwendet werden.

Mit Vorteil ist das Messgerät MG eingerichtet, ein Ausschalten des elektrischen Gerätes EG (z.B. Beamer) im Nicht-Standby-Modus zu verhindern. Dadurch wird z.B. die Lebensdauer eines Beamers verlängert.

Eine weitere vorteilhafte Ausgestaltung der Erfindung liegt darin, dass das Messgerät eingerichtet ist für eine Integration in einem Aktor, insbesondere Schaltaktor oder Dimmaktor. Ein Dimmaktor kann über einen Phasenanschnitt oder einen Phasenabschnitt angesteuert werden. Ein Schaltaktor kann z.B. über eine Puls-Weiten-Modulation (PWM) angesteuert werden. Ein PWM-Signal kann z.B. über einen Tiefpass demoduliert werden

Mit Vorteil umfasst ein Aktor, insbesondere Schaltaktor oder Dimmaktor, das erfindungsgemässe Messgerät MG, mit Vorteil in einem gemeinsamen Gehäuse. Das erfindungsgemässes Messgerät MG wird mit Vorteil in den Aktor, z.B. Schaltaktor oder Dimmaktor integriert. Dies ergibt ein Gerät mit einer kompakten Bauweise.

Das erfindungsgemässe Messgerät MG implementiert ein Verfahren mit dem zwischen Standby-Betrieb und aktivem Betrieb unterschieden werden kann. Dies erfolgt durch die Festlegung eines minimalen Stromverbrauchs, der bei Überschreitung ein aktives (eingeschaltetes) elektrisches Gerät EG erkennt.

Es wird ein Parameter (definierte Leistungsschwelle, z.B. Wirkleistungsschwelle oder Scheinleistungsschwelle) definiert, der den maximal möglichen Stromverbrauch im Standby-Betrieb definiert. Mit dieser Schwelle kann nun zwischen Standby-Betrieb und aktivem Betrieb unterschieden werden. Die aktiven Betriebsstunden, das sind die Stunden in denen der Stromverbrauch über Standby liegt, können nun separat gezählt bzw. erfasst werden.

Mit einem zweiten Zähler Z2 können auch die Standby-Betriebsstunden gezählt bzw. protokolliert werden. Dies ist bei elektrischen Geräten EG interessant, bei denen bestimmte Wartungen nach einer bestimmten Anzahl von Stunden im Standby erforderlich sind. Durch Auswertung des Stromverbrauchs kann das Ausschalten des elektrischen Gerätes EG unterbunden werden. Damit
wird erreicht, dass das elektrische Gerät EG nicht geschädigt wird.

Ein Aktor kann z.B. durch eine zusätzliche Meldung ("Gerät ist noch aktiv und kann nicht ausgeschaltet werden") den Benutzer über diesen Umstand informieren.

Daraus ergeben sich u.a. folgende Vorteile:
- Durch die Erkennung von aktiven Geräten kann das erzwungene Ausschalten von aktiven Geräten verhindert werden und die Gerätelebensdauer wird erhöht.
- Die Wartungsintervalle können auf die wirkliche (aktive) Betriebszeit abgestimmt werden. Dadurch werden Kosten durch zu kurze Wartungsintervalle gesenkt werden

Im Messgerät MG und/oder im elektrischen Gerät EG ist eine Leistungs- bzw. Stromschwelle (z.B. eine Wirkstromschwelle) definiert. Wenn der Strom den definierten Wert überschreitet zählt der Zähler Z1 (AktiveZeit-Zähler) die Zeit. Bei einem z.B. Beamer wird dadurch die Zeit gemessen, die die Beamerlampe bzw. der Beamer eingeschaltet war.

Ein zweiter Zähler Z2(StandbyZeit-Zähler) zählt die Zeit wenn der Beamer im Standby ist. Das ist der Fall wenn der Strom != 0 und unterhalb der definierten Stromschwelle ist.

Ein dritter Zähler Z3(Betriebszeit-Zähler) zählt die Zeit wenn der Strom != 0 (bzw. das Relais im Aktor eingeschaltet ist) ist (vorteilhafterweise ein Wert von einigen mA).

Das Messgerät MG kann im elektrischen Gerät EG als Bauteil integriert sein. Das Messgerät MG kann aber auch mit dem elektrischen Gerät EG bzw. mit dem Verbraucher V (z.B. Motor oder Lampe im elektrischen Gerät) geeignet elektrisch verbunden werden, z.B. durch einen entsprechenden Steckanschluss.

### Bezugszeichen

- EG: Elektrisches Gerät
- MG: Messgerät
- EL: Elektrische Leistungszuführung
- Z1, Z2, Z3: Zähler
- V: Verbraucher
- EV: Einschaltvorrichtung
- AZ: Anzeigeeinrichtung
- PT: Programmiertaste

## Patentansprüche

1. Messgerät (MG) zur Erfassung der Betriebszeiten eines elektrischen Verbrauchers (V), insbesondere eines elektrischen Gerätes, umfassend:
einen ersten Zähler (Z1) zum Erfassen der am elektrischen Gerät anliegenden aktiven Betriebszeit, wobei der erste Zähler (Z1) eingerichtet ist, die Zeit zu erfassen, wenn die vom elektrischen Verbraucher (V) verbrauchte elektrische Leistung eine definierte Leistungsschwelle überschreitet;
einen zweiten Zähler (Z2) zum Erfassen der Standby-Zeit des elektrischen Verbrauchers (V), wobei der zweite Zähler (Z2) eingerichtet ist, zu erkennen, wenn am elektrischen Verbraucher (V) eine elektrische Spannung anliegt, wobei der zweite Zähler (Z2) weiter dazu eingerichtet ist, die Zeit zu erfassen, bis die vom Verbraucher verbrauchte elektrische Leistung die definierte Leistungsschwelle erreicht hat oder wieder unterschritten hat,
wobei die Leistungsschwelle auf historischen bzw. aufgezeichneten Daten für das elektrische Gerät beruht und angepasst wird, wenn die Tendenz der Standby-Leistung ansteigt.

2. Messgerät (MG) nach Anspruch 1, weiter umfassend einen dritten Zähler (Z3), wobei der dritte Zähler (Z3) eingerichtet ist, zu erkennen, wenn am elektrischen Verbraucher (V) eine elektrische Spannung anliegt, wobei der dritte Zähler (Z3) weiter eingerichtet ist, die Zeit zu erfassen, wenn am elektrischen Verbraucher (V) eine elektrische Spannung anliegt.

3. Messgerät (MG) nach einem der vorstehenden Ansprüche, wobei der erste Zähler (Z1) eingerichtet ist, zu erkennen, wenn eine Einschaltvorrichtung (EV) oder ein Relais den Verbraucher mit Energie versorgt.

4. Messgerät (MG) nach einem der vorstehenden Ansprüche, wobei der erste, zweite und dritte elektrische Zähler (Z1, Z2, Z3) als nichtflüchtige Speicher realisiert sind.

5. Messgerät (MG) nach einem der vorstehenden Ansprüche 1 bis 4, wobei die definierte Leistungsschwelle bei im Wesentlichen konstanter Netzspannung am elektrischen Gerät (EG) mit einer definierten Stromschwelle korrespondiert.

6. Messgerät (MG) nach einem der vorstehenden Ansprüche 1 bis 4, wobei, wenn die anliegende elektrische Leistung einen Blindleistungsanteil von kleiner 10%, insbesondere kleiner 5%, aufweist, anstelle der Wirkleistung die Scheinleistung erfasst wird, wobei die definierte Wirkleistungsschwelle dann mit einer definierten Scheinleistungsschwelle korrespondiert.

7. Messgerät (MG) nach einem der vorstehenden Ansprüche, wobei das Messgerät (MG) im elektrischen Gerät (EG) integriert ist.

8. Messgerät (MG) nach einem der vorstehenden Ansprüche, wobei das Messgerät (MG) als Stromzählersteckdose ausgebildet ist und das elektrische Gerät (EG) an der Stromzählersteckdose anschliessbar ist.

9. Messgerät (MG) nach einem der vorstehenden Ansprüche, wobei die Wirkleistung oder die Scheinleistung aus mehreren Phasen gebildet wird.

10. Messgerät (MG) nach einem der vorstehenden Ansprüche, wobei das Messgerät (MG) eingerichtet ist, ein Ausschalten des elektrischen Gerätes (EG) im Nicht-Standby-Modus zu verhindern.

11. Messgerät (MG) nach einem der vorstehenden Ansprüche, wobei das Messgerät (MG) eingerichtet ist, für die Integration in einem Aktor, insbesondere Schaltaktor oder Dimmaktor oder Puls-Weiten-Modulation.

12. Aktor, insbesondere Schaltaktor oder Dimmaktor, umfassend ein Messgerät (MG) nach einem der Ansprüche 1 bis 11.

## Claims

1. Metering device (MG) for detecting the operating periods of an electrical consumer (V), in particular an electrical device, comprising:
a first meter (Z1) for detecting the active operating period occurring at the electrical device, wherein the first meter (Z1) is configured to detect the period when the electrical power consumed by the electrical consumer (V) exceeds a defined power threshold;
a second meter (Z2) for detecting the standby period of the electrical consumer (V), wherein the second meter (Z2) is configured to recognise when an electrical voltage is applied across the electrical consumer (V), wherein the second meter (Z2) is further configured to detect the period until the electrical power consumed by the consumer has reached the defined power threshold or has fallen below it again,
wherein the power threshold is based on historical or recorded data for the electrical device and is adjusted if there is an increasing trend toward using standby power.

2. Metering device (MG) according to claim 1, further comprising a third meter (Z3), wherein the third meter (Z3) is configured to recognise when an electrical voltage is applied across the electrical consumer (V), wherein the third meter (Z3) is further configured to detect the period during which an electrical voltage is applied across the electrical consumer (V).

3. Metering device (MG) according to one of the preceding claims, wherein the first meter (Z1) is configured to recognise when a switch-on device (EV) or a relay supplies energy to the consumer.

4. Metering device (MG) according to one of the preceding claims, wherein the first, second and third electric meters (Z1, Z2, Z3) take the form of non-volatile memories.

5. Metering device (MG) according to one of preceding claims 1 to 4, wherein the defined power threshold corresponds with a defined current threshold if the grid voltage at the electrical device (EG) is substantially constant.

6. Metering device (MG) according to one of preceding claims 1 to 4, wherein, if the applied electrical power has a reactive power component of less than 10%, in particular less than 5%, the apparent power is detected instead of the effective power, in which case the defined effective power threshold corresponds with a defined apparent power threshold.

7. Metering device (MG) according to one of the preceding claims, wherein the metering device (MG) is integrated in the electrical device (EG).

8. Metering device (MG) according to one of the preceding claims, wherein the metering device (MG) takes the form of a supply meter receptacle outlet, and the electrical device (EG) is connectable to the supply meter receptacle outlet.

9. Metering device (MG) according to one of the preceding claims, wherein the effective power or the apparent power is formed from a plurality of phases.

10. Metering device (MG) according to one of the preceding claims, wherein the metering device (MG) is configured to prevent the electrical device (EG) from being switched off when it is in non-standby mode.

11. Metering device (MG) according to one of the preceding claims, wherein the metering device (MG) is configured for integration in an actuator, in particular a switching actuator or dimming actuator, or pulse width modulation.

12. Actuator, in particular a switching actuator or dimming actuator, comprising a metering device (MG) according to one of claims 1 to 11.

## Revendications

1. Appareil de mesure (MG) permettant d'enregistrer les temps de fonctionnement d'un consommateur électrique (V), en particulier d'un appareil électrique, comprenant :
un premier compteur (Z1) permettant d'enregistrer le temps de fonctionnement actif appliqué à l'appareil électrique, dans lequel le premier compteur (Z1) est conçu afin d'enregistrer si la puissance électrique consommée par le consommateur électrique (V) dépasse un seuil de puissance défini ;
un deuxième compteur (Z2) permettant d'enregistrer le temps de veille du consommateur électrique (V), dans lequel le deuxième compteur (Z2) est conçu afin de détecter si une tension électrique est appliquée au consommateur électrique (V), dans lequel le deuxième compteur (Z2) est en outre conçu afin d'enregistrer le temps s'écoulant jusqu'à ce que la puissance électrique consommée par le consommateur atteigne le seuil de puissance défini ou descende en dessous de celui-ci,
dans lequel le seuil de puissance est basé sur des données historiques ou enregistrées concernant l'appareil électrique et est ajusté lorsque la tendance de la puissance de veille augmente.

2. Appareil de mesure (MG) selon la revendication 1, comprenant en outre un troisième compteur (Z3), dans lequel le troisième compteur (Z3) est conçu afin de détecter si une tension électrique est appliquée au consommateur électrique (V), dans lequel le troisième compteur (Z3) est en outre conçu afin d'enregistrer si une tension électrique est appliquée au consommateur électrique (V).

3. Appareil de mesure (MG) selon l'une quelconque des revendications précédentes, dans lequel le premier compteur (Z1) est conçu afin de reconnaître si un dispositif de mise sous tension (EV) ou un relais alimente le consommateur en énergie.

4. Appareil de mesure (MG) selon l'une quelconque des revendications précédentes, dans lequel les premier, deuxième et troisième compteurs électriques (Z1, Z2, Z3) sont réalisés sous la forme de mémoires non-volatiles.

5. Appareil de mesure (MG) selon l'une quelconque des revendications précédentes 1 à 4, dans lequel le seuil de puissance défini correspond à un seuil de courant défini pour une tension secteur essentiellement constante au niveau de l'appareil électrique (EG).

6. Appareil de mesure (MG) selon l'une quelconque des revendications précédentes 1 à 4, dans lequel, si la puissance électrique appliquée présente une composante de puissance réactive inférieure à 10 %, en particulier inférieure à 5 %, la puissance apparente est enregistrée à la place de la puissance active, dans lequel le seuil de puissance active défini correspondant alors à un seuil de puissance apparente défini.

7. Appareil de mesure (MG) selon l'une quelconque des revendications précédentes, dans lequel l'appareil de mesure (MG) est intégré dans l'appareil électrique (EG).

8. Appareil de mesure (MG) selon l'une quelconque des revendications précédentes, dans lequel l'appareil de mesure (MG) est formé comme une prise enfichable de compteur de courant électrique et l'appareil électrique (EG) est connectable à la prise enfichable de compteur de courant électrique.

9. Appareil de mesure (MG) selon l'une quelconque des revendications précédentes, dans lequel la puissance active ou la puissance apparente est formée à partir de plusieurs phases.

10. Appareil de mesure (MG) selon l'une quelconque des revendications précédentes, dans lequel l'appareil de mesure (MG) est conçu afin d'empêcher la coupure de l'appareil électrique (EG) en non-mode veille.

11. Appareil de mesure (MG) selon l'une quelconque des revendications précédentes, dans lequel l'appareil de mesure (MG) est conçu afin d'être intégré dans un actionneur, en particulier un actionneur de commutation ou un actionneur de variation ou une modulation de largeur d'impulsion.

12. Actionneur, en particulier actionneur de commutation ou actionneur de variation, comprenant un appareil de mesure (MG) selon l'une quelconque des revendications 1 à 11.
